# EUROPÄISCHE PATENTSCHRIFT

(11) **EP 2 446 336 B1**
(45) Veröffentlichungstag und Bekanntmachung des Hinweises auf die Patenterteilung: **20.03.2013**
(21) Anmeldenummer: 09775729.8
(22) Anmeldetag: 24.06.2009
(51) Int. Cl.: G05D 11/13

(54) **ANLAGE UND VERFAHREN ZUR KONTINUIERLICHEN HERSTELLUNG EINES FLÜSSIGKEITSGEMISCHES**
SYSTEM AND METHOD FOR CONTINUOUSLY PRODUCING A LIQUID MIXTURE
DISPOSITIF ET PROCÉDÉ POUR PRODUIRE EN CONTINU UN MÉLANGE LIQUIDE

(43) Veröffentlichungstag der Anmeldung: 02.05.2012
(73) Patentinhaber: Miteco AG, 4800 Zofingen (CH); Cadeo, Angelo, 4665 Oftringen (CH)
(72) Erfinder: CADEO, Angelo, CH-4665 Oftringen (CH); EGGLER, Thomas, CH-4852 Rothrist (CH)
(74) Vertreter: Schalch, Rainer
(86) Internationale Anmeldenummer: PCT/CH2009/000217
(87) Internationale Veröffentlichungsnummer: WO 2010/148521

(56) Entgegenhaltungen:
- EP-A2- 0 334 213
- WO-A1-99/48387
- US-A- 6 047 719

## Beschreibung

### Technisches Gebiet

Die Erfindung betrifft eine Anlage zur kontinuierlichen Herstellung eines aus mindestens einer, insbesondere mindestens zwei flüssigen, pumpfähigen Komponenten bestehendem Flüssigkeitsprodukts, mit einem ersten und einem zweiten Speicherbehälter für jede Komponente und einem jeweils dem ersten und dem zweiten Speicherbehälter zugeordneten ersten bzw. zweiten Mengenstromregelkreis zur Einstellung eines Soll-Mengenstroms der Komponente, und ein Verfahren zum Betreiben der Anlage, gemäss den Oberbegriffen der unabhängigen Ansprüche.

### Stand der Technik

Bei der Herstellung von Flüssigkeitsprodukten sind Vorrichtungen und Verfahren bekannt, welche Lösungen zur Herstellung eines aus mehreren Komponenten bestehenden Flüssigkeitsprodukts bieten. Zu den Aufgaben solcher Anlagen bzw. Verfahren gehören die Bereitstellung der Komponenten, das Mischen dieser Komponenten und die Zuführung des gemischten Flüssigkeitsprodukts an Weiterverarbeitungsanlagen. Typischerweise ist ein Weiterverarbeitungsschritt das Abfüllen des Flüssigkeitsprodukts in dafür vorgesehene Behälter. Beispielsweise werden in der Lebensmittelindustrie mit Hilfe solcher Anlagen verschiedenste Erfrischungsgetränke, milchhaltige Produkte, etc. gemischt.

Zusätzlich zu der Bereitstellung eines Getränks, das z.B. aus einem Sirupkonzentrat und Wasser besteht, ist es in vielen Fällen eine Anforderung, das Getränk zusätzlich mit Kohlendioxid zu versetzen, wie z.B. Coca Cola^{®}, Pepsi Cola® usw. Eine weitere Anforderung ist die Möglichkeit, unterschiedliche Flüssigkeitsprodukte gleichzeitig in der gleichen Anlage herzustellen.

Um diesen Anforderungen zu genügen, müssen die Anlagen zur Herstellung der Flüssigkeitsprodukte möglichst flexibel konzipiert sein.

Aus der Patentanmeldung WO 99/48387 ist es nun bekannt, ein Lebensmittelgemisch aus mindestens zwei unterschiedlichen Gemischkomponenten herzustellen. Dabei werden solche Gemischkomponenten, die für mehrere Lebensmittelgemische verwendet werden, in einem einzigen Anlageteil gelagert und aus diesem für die Vorbereitung der gewünschten Lebensmittelgemische bereitgestellt. Durch die Versorgung mehrerer Produktionslinien mit der gemeinsamen Komponente wird eine Einsparung von Lagerbehältern, Mess- und Regeleinrichtungen und Rohrleitungen erreicht.

Bei der Patentanmeldung EP 0334213 A wird ein Verfahren zur kontinuierlichen Herstellung eines fliessfähigen Gemisches offenbart, bei dem die Komponenten des herzustellenden Gemisches jeweils solange in einem geschlossenen Kreislauf in ihren Lagerbehältern zurückgeführt werden, bis ein Soll-Mengenstrom jeder Komponente erreicht ist, worauf die Komponenten gemischt werden können, ohne einen Stabilisierungsvorgang eines Regelkreises des Gemisches abwarten zu müssen. Der Vorteil der genannten Lösung besteht darin, dass das Gemisch, im Gegensatz zu anderen, den Stabilisierungsvorgang durchlaufenden Anlagen, bei welchen während dieses Vorgangs das Gemisch entsorgt werden muss, sofort nach einer Umschaltung vom Rückführ- in den Mischbetrieb eine vorgeschriebene Güte hat und somit kein Stabilisierungsvorgang notwendig ist.

Bei der Zugabe von Kohlendioxid wird das z.B. durch die obengenannte Methode hergestellte Gemisch in einem Zwischenbehälter gesammelt, weitergeleitet und mit Kohlendioxid versetzt. Danach wird das fertige Flüssigkeitsprodukt in einen Abfüllbehälter eingeleitet, woraus es zur Abfüllung entnommen und an eine Abfüllvorrichtung weitergeleitet wird.

Abfüllvorrichtungen sind dem Stop-Go Prinzip unterworfen, d.h. es werden nicht kontinuierlich, unterschiedliche Mengen des Flüssigkeitsprodukts entnommen. Der Stop-Go Betrieb ergibt sich aufgrund von Fehlverhalten anderer Anlageteile, wie z.B. Füller, Etikettiermaschine, etc. der Herstellungskette. Die Anlage zur Bereitstellung des Flüssigkeitsprodukts muss deshalb in der Lage sein, bei beliebigen zu entnehmenden Flüssigkeitsmengen über einen beliebigen Zeitraum das mit Kohlendioxid versetzte Gemisch bereitstellen.

### Darstellung der Erfindung

Es ist Aufgabe der vorliegenden Erfindung, eine Anlage bereitzustellen, mit der eine stabilere Justierung des Regelkreises des Gemisches erreicht werden kann, bei der Mischung von Flüssigkeitskomponenten unter Zugabe von Kohlendioxid Kosten reduziert werden können und eine Wartung der Anlage vereinfacht wird. Es ist ferner Aufgabe der Erfindung, ein Verfahren zum Betreiben einer solchen Anlage bereitzustellen.

Diese Aufgabe wird bei einer Anlage der eingangs genannten Art dadurch gelöst, dass die Speicherbehälter und der Abfüllbehälter als Druckbehälter ausgebildet sind und miteinander mittels mindestens einer Druckausgleichsleitung zur Herstellung eines Druckausgleichs zwischen den Speicherbehältern und dem Abfüllbehälter verbunden sind. Die Speicherbehälter und der Abfüllbehälter bilden zusammen mit der Druckausgleichsleitung ein Druckausgleichsystem.

Weiterhin wird ein Verfahren zur kontinuierlichen Herstellung eines aus mindestens zwei Komponenten und Kohlendioxid bestehenden Flüssigkeitsprodukts, unter Verwendung der erfindungsgemässen Anlage, beansprucht. Im Betrieb der Anlage wird ein kontinuierlicher Druckausgleich zwischen den Speicherbehältern und dem Abfüllbehälter mittels der Druckausgleichsleitung vorgenommen.

Anspruchsgemäss werden also eine Anlage und ein Verfahren mit einer Druckausgleichsfunktion zwischen den Speicherbehältern und dem Abfüllbehälter bereitgestellt. Dadurch wird der konventionelle Lösungsweg verlassen, welcher auf der Verwendung von unter atmosphärischem Druck stehenden Speicher- und Zwischenbehältern, und unter erhöhtem Druck stehenden Abfüllbehältern basiert, bei welchem Lösungsweg hohe Druckunterschiede zwischen dem Zwischen- und dem Abfüllbehälter entstehen. Beispielsweise beträgt bei bekannten Lösungen der Druckunterschied zwischen dem Zwischenbehälter und dem Abfüllbehälter bis zu 7 bar. Bei der vorliegenden Lösung wird die Regelung der Flüssigkeitsmenge aufgrund eines im Wesentlichen gleichen Drucks zwischen den Speicherbehältern und dem Abfüllbehälter einfacher. Insbesondere aufgrund des Stop-Go Betriebs der Abfüllvorrichtung entstehende grosse Druckschwankungen zwischen dem Abfüllbehälter und den Flüssigkeit zuführenden Leitungen/Bereiche werden mittels der erfindungsgemässen Anlage bei Betrieb mit dem erfindungsgemässen Verfahren im Wesentlichen eliminiert.

### Kurzbeschreibung der Zeichnungen

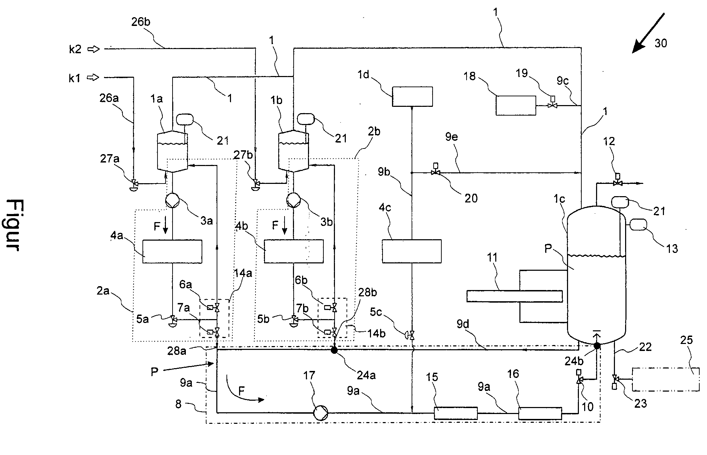

Die Figur zeigt einen Schaltplan der erfindungsgemässen Anlage mit dazugehörigen Komponenten und ihre Verbindungen.

### Wege zur Ausführung der Erfindung

Weitere vorteilhafte Ausgestaltungen der Erfindung ergeben sich aus den abhängigen Ansprüchen und den anhand der Figur nachfolgend dargestellten Ausführungsbeispielen.

Die Figur zeigt einen Schaltplan einer bevorzugten Ausführungsform der erfindungsgemässen Anlage 30 mit dazugehörigen Bestandteilen und ihren Verbindungen. Zwei Flüssigkeitskomponenten k1, k2 werden über eine erste und eine zweite Versorgungsleitung 26a, 26b jeweils in einen Speicherbehälter 1a, 1b eingespeist. Die Komponenten können z.B. ein aus 60% Zucker und 40% Fruchtsaft bestehender Sirup und Wasser sein, wobei das Gemisch beispielsweise aus 20% Sirup und 80% Wasser besteht. Die Menge der Komponenten wird in Abhängigkeit von einem Flüssigkeitsstand in den Speicherbehältern 1a, 1b mittels jeweils eines ersten und eines zweiten Versorgungsumschaltventils 27a, 27b reguliert. Dabei wird der Flüssigkeitsstand mittels jeweils eines Flüssigkeitsstandmessgeräts 21 ermittelt.

Ein Kohlendioxidspeicher 1d sorgt für eine Versetzen des aus einem Gemisch der ersten und zweiten Komponente k1, k2 bestehendem Flüssigkeitsprodukts P mit Kohlendioxid. Das mit Kohlendioxid versetzte Flüssigkeitsprodukt P wird in einem Abfüllbehälter 1c gelagert, der auch mit einem Flüssigkeitsstandmessgerät 21 ausgerüstet ist. Optional ist nur eine Kombination von Abfüll-und Speicherbehälter oder lediglich ein einzelner Behälter mit dem Flüssigkeitsstandmessgerät 21 ausgerüstet.

Die Speicherbehälter 1a, 1b sind mit dem Abfüllbehälter 1c über eine Druckausgleichleitung 1 verbunden. Vorteilhafterweise sorgt die Druckausgleichsleitung 1 für einen gleichen Druck in allen Behältern. Dieser Druck beträgt zwischen 1 und 10 bar und ist typischerweise 6 bar. Die Speicherbehälter 1a, 1b, der Abfüllbehälter 1c und die Druckausgangsleitung 1 bilden somit ein Druckausgleichsystem. Um Druckausgleichvorgänge auf ein Minimum zu reduzieren wird der Flüssigkeitsstand in den Speicherbehältern 1a, 1b und im Abfüllbehälter 1c im Wesentlichen konstant gehalten. Würde beispielsweise eine grosse Menge der Komponente k1 aus dem ersten Speicherbehälter 1a entnommen, ohne über die Versorgungsleitung 27a die Komponente k1 nachzufüllen, so entstünde infolge einer Vergrösserung des Gasraums und einer Änderung der Flüssigkeitshöhe ein Ungleichgewicht wie ein Unterdruck im Speicherbehälter 1a, der über die Druckausgangsleitung kompensiert werden müsste. Dies hätte zu Folge, dass der Druck im zweiten Speicherbehälter 1b und im Abfüllbehälter 1c sinken würde. Da das Flüssigkeitsprodukt P mit Kohlendioxid versetzt ist, bestünde die Gefahr, dass durch den niedrigeren Druck im Abfüllbehälter 1c Kohlendioxid aus dem Flüssigkeitsprodukt P in die Atmosphäre des Abfüllbehälters 1c entweichen würde, so dass das Flüssigkeitsprodukt P nicht mehr eine geforderte Güte hätte. Daher werden Druckschwankungen, welche mit Flüssigkeitsentnahme aus den Speicherbehältern 1a, 1b und/oder dem Abfüllbehälter 1c einhergehen, durch die Druckausgleichsvorgänge auf im Wesentlichen höchstens +/-0,2 bar begrenzt. Durch den im Wesentlichen konstanten Flüssigkeitsspiegel in allen Behältern wird also ein Druckabfall bzw. eine Druckerhöhung minimiert und ein Beitrag zu einer hohen Qualität des Flüssigkeitsprodukts P geleistet.

Eine weitere Möglichkeit den Druckabfall zu vermeiden bietet eine bevorzugte Ausführungsform der erfindungsgemässen Anlage 30, bei der der Kohlendioxidspeicher 1d mittels einer mit einem dritten Umschaltventil 20 versehenen vierten Leitung 9e mit dem Druckausgleichsystem verbunden ist, wobei die vierte Leitung 9e derart ausgestaltet ist, dass sie in einem geöffneten Zustand des dritten Umschaltventils 20 Kohlendioxid in das Druckausgleichsystem leitet.

In einer weiteren bevorzugten Ausführungsform der erfindungsgemässen Anlage 30 wird dem Druckabfall durch die Zuführung von Gas aus einem zusätzlichen Gasbehälter 18, welcher mittels einer mit einem zweiten Umschaltventil 19 versehenen dritten Leitung 9c mit dem Druckausgleichsystem verbunden ist, in das Druckausgleichsystem, entgegengewirkt. Das Gas wird durch die dritte Leitung 9c dann eingespeist, wenn das zweite Umschaltventil 19 in einem geöffneten Zustand ist. Diese Variante bietet eine kostengünstige Art der Druckregulierung mittels eines anderen, z.B. billigeren Gases wie Luft.

Im umgekehrten Fall, also bei einer Druckerhöhung im Druckausgleichsystem, sorgt ein dem Abfüllbehälter 1c zugeordnetes viertes Umschaltventil 12, insbesondere ein Überdruckventil, zu einer Druckreduzierung im Inneren des Druckausgleichsystems. In einer bevorzugten Ausführungsform der erfindungsgemässen Anlage 30 ist das vierte Umschaltventil 12 derart ausgestaltet, dass es einerseits zur Druckreduzierung und andererseits zur Entlüftung des Druckausgleichsystems dient.

Druckdaten werden mittels eines Drucksensors 13 gesammelt, welcher im Druckausgleichsystem angeordnet und vorzugsweise dem Abfüllbehälter 1c zugeordnet ist, und welcher einen auftretenden Gasdruck in Inneren des Druckausgleichsystems misst.

Im Folgenden wird die Herstellung des Flüssigkeitsprodukts P unter den bereits erläuterten Druckvoraussetzungen, beschrieben.

Jeder der Speicherbehälter 1a, 1b ist mit einem ersten bzw. einem zweiten Mengenregelstromkreis 2a, 2b, insbesondere nach der in der Patentanmeldung EP 0334213 A detailliert offenbarten Art, verbunden. Die Mengenregelstromkreise 2a, 2b sind in der Figur durch die gepunkteten Linien dargestellt. Sie umfassen eine erste und eine zweite Fördereinrichtung 3a, 3b, vorzugsweise eine Flüssigkeitspumpe, welche die erste bzw. die zweite Komponente k1, k2 aus dem jeweiligen Speicherbehälter 1a, 1b in den jeweiligen Mengenregelstromkreis 2a, 2b fördert. Weiterhin umfassen die Mengenregelstromkreise 2a, 2b nacheinander in Förderrichtung F der Komponenten k1, k2 einen ersten bzw. einen zweiten Durchflussmesser 4a, 4b zur Messung eines Ist-Mengenstroms der Komponenten k1, k2 und ein erstes bzw. ein zweites Regelventil 5a, 5b zur Einstellung des Ist-Mengenstroms. Für jeden Mengenstromregelkreis 2a, 2b ist weiterhin eine erste bzw. eine zweite Weichenanordnung 14a, 14b vorgesehen, welche einerseits bei einer Abweichung des Ist-Mengenstroms vom jeweiligen Soll-Mengenstrom die Komponenten k1, k2 in den jeweiligen Speicherbehälter 1a, 1b zurückführen und andererseits bei einer Übereinstimmung des Ist-Mengenstroms mit dem jeweiligen Soll-Mengenstrom die Komponenten k1, k2 in eine erste Leitung 9a, an deren ersten Ende 24a, einspeist. In der beschriebenen Ausführungsform fällt das erste Ende 24a der ersten Leitung 9a mit einem Anschlusspunkt 28b des zweiten Mengenregelstromkreises 2b an die erste Leitung 9a zusammen. Das erste Mengenregelstromkreis 2a wird an einer Stelle 28a im Verlauf der ersten Leitung 9a angeschlossen. In einer hier nicht dargestellten Ausführungsform fallen Anschlüsse 28a, 28b beider Mengenregelstromkreise 2a, 2b mit dem ersten Ende 24a der ersten Leitung 9a zusammen.

Die Weichenanordnungen 14a, 14b der beiden Mengenregelstromkreise 2a, 2b umfassen in einer bevorzugten Ausführungsform der erfindungsgemässen Anlage 30 jeweils ein erstes und ein zweites Rückflussumschaltventil 6a, 6b und ein erstes und ein zweites Zuführungsumschaltventil 7a, 7b. Die Funktionsweise der weichenanordnungen 14a, 19b wird anhand der ersten Weichenanordnung 14a erläutert. Im Falle, dass der Ist-Mengenstrom der ersten Komponente k1 vom Soll-Mengenstrom abweicht, wird das erste Zuführungsumschaltventil 7a geschlossen und das erste Rückflussumschaltventil 6a geöffnet. Dadurch wird die Komponente k1 zurück in den ersten Mengenregelstromkreis 2a geleitet und weiter zurück in den ersten Speicherbehälter 1a. Im Falle, dass der Ist-Mengenstrom der ersten Komponente k1 mit dem Soll-Mengenstrom übereinstimmt, wird das erste Zuführungsumschaltventil 7a geöffnet und das erste Rückflussumschaltventil 6a geschlossen. Dadurch wird die erste Komponente k1 in die erste Leitung 9a geleitet, jedoch erst dann, wenn auch der Ist-Mengenstrom der zweiten Komponente k2 mit ihrem Soll-Mengenstrom übereinstimmt. Mit anderen Worten werden alle Komponenten k1, k2 erst dann der ersten Leitung 9a zugeführt, wenn jede Komponente k1, k2 ihren Soll-Mengenstrom erreicht hat. Vorzugsweise bewirkt diese Art der Zuleitung ein sofortiges Erreichen einer geforderten Konzentration der Komponenten k1, k2 im Flüssigkeitsprodukt P, sobald der Mischbetrieb aufgenommen ist. Dadurch erübrigt sich eine Stabilisierung des gemischten Flüssigkeitsprodukts P. Hingegen muss bei bekannten Lösungen das Gemisch bis zur Stabilisierung entsorgt werden. In der Figur soll der mit P gekennzeichnete Pfeil verdeutlichen, dass die erste Leitung 9a das Flüssigkeitsprodukt P beinhaltet.

Die erste Leitung 9a ist an ihrem ersten Ende 24a mit einer Abflussleitung 9d zur Abführung einer Menge des Flüssigkeitsprodukts P aus dem Abfüllbehälter 1c verbunden. Die Abflussleitung 9d ist ihrerseits mit dem Abfüllbehälter 1c, insbesondere in einem Bodenbereich des Abfüllbehälters 1c, verbunden. Die erste Leitung 9a und die Abflussleitung 9d bilden einen Zirkulationskreislauf 8 des Flüssigkeitsprodukts P.

Weiterhin ist die erste Leitung 9a mit einer zweiten Leitung 9b zur Einspeisung von Kohlendioxid verbunden und an einem zweiten Ende 24b an den Abfüllbehälter 1c angeschlossen. Der Kohlendioxidspeicher 1d ist an der zweiten Leitung 9b angeschlossen, wobei die zweite Leitung 9b einen dritten Durchflussmesser 4c und ein drittes Regelventil 5c zur Regelung der in die erste Leitung 9a eingespeisten Kohlendioxid-Durchflussmenge umfasst. Insbesondere wird durch das dritte Regelventil 5c eine Durchflussmenge des Kohlendioxids in den Zirkulationskreislauf 8 derart eingestellt, dass das Flüssigkeitsprodukt P einen Kohlendioxid-Sollwert beibehält. Beispielsweise werden bei einem typischen Erfrischungsgetränk ca. vier Liter Kohlendioxid pro Liter Flüssigkeitsgemisch beigegeben.

Die erste Leitung 9a speist das mit Kohlendioxid versetzte Flüssigkeitsprodukt P in den Abfüllbehälter 1c ein, aus welchem Abfüllbehälter 1c nicht-kontinuierlich und nicht konstante Mengen des Flüssigkeitsprodukts P über eine Abfüllleitung 22 entnommen werden und über ein Abführumschaltventil 23 in eine Abfüllvorrichtung 25 der eingangs beschriebenen Art, eingeleitet. Die Beförderung des Flüssigkeitsprodukts P durch die erste Leitung 9a erfolgt mittels einer dritten Fördereinrichtung 17, welche vorzugsweise als eine Flüssigkeitspumpe ausgebildet ist. Die dritte Fördereinrichtung 17 ist im Zirkulationskreislauf 8 angeordnet und derart ausgestaltet, dass sie das im Zirkulationskreislauf 8 befindliche Flüssigkeitsprodukt P in ein Mischelement 16 und weiter, bei einer geöffneten Stellung eines in Förderrichtung F hinter dem Mischelement 16 angeordneten ersten Umschaltventils 10, in den Abfüllbehälter 1c leitet. Das erste Umschaltventil 10 hat zusätzlich die Aufgabe, den Zirkulationskreislauf 8 beim Abschalten der erfindungsgemässen Anlage 30 zu schliessen.

Das Mischelement 16, vorzugsweise als ein statisches Mischelement ausgebildet, verbessert die bereits in der ersten Leitung 9a erfolgte Mischung der ersten und der zweiten Komponente k1 und k2 im Hinblick auf Homogenität. Vorzugsweise ist das Mischelement möglichst nah an dem zweiten Ende 24b der ersten Leitung 9a angeordnet, um ein gut gemischtes Flüssigkeitsprodukt P in den Abfüllbehälter 1c einzuspeisen. Es ist jedoch möglich, das Mischelement 16 an einer beliebigen Stelle in der ersten Leitung 9a zu schalten.

Der Zirkulationskreislauf 8 umfasst weiterhin ein in der ersten Leitung 9a geschaltetes, insbesondere zwischen der dritten Fördereinrichtung 17 und dem Mischelement 16 geschaltetes, Kühlelement 15 zum Kühlen des Flüssigkeitsprodukts P. Mittels des Kühlelements 15 wird das Flüssigkeitsprodukt P auf eine Soll-Temperatur gebracht und gehalten. Die Einhaltung der Soll-Temperatur ist unabhängig vom Stop-Go Betrieb der Herstellungskette gewährleistet. Vorteilhafterweise wird bei einer Positionierung des Kühlelements 15 in Förderrichtung stromaufwärts des Mischelements 16 erreicht, dass das Flüssigkeitsprodukt P, dessen Kohlendioxid Aufnahme von seiner Temperatur und seiner lokalen Turbulenz abhängt. Damit können Parameter des Mischelements 16 auf ein optimales Mischen des Flüssigkeitsprodukts P eingestellt werden. Das Kühlelement 15, das beispielweise als Plattenwärmetauscher ausgebildet ist, kann jedoch an einer anderen Stelle in der ersten Leitung 9a geschaltet werden. Ferner kann in bestimmten Anwendungsumgebungen auf das Kühlelement 15 verzichtet werden.

In einer bevorzugten Ausführungsform der erfindungsgemässen Anlage 30 ist die zweite Leitung 9b zwischen der dritten Fördereinrichtung 17 und dem Kühlelement 15 an der ersten Leitung 9a angeschlossen. Vorzugsweise enthält damit das Flüssigkeitsprodukt P alle geforderten Zutaten und es wird sichergestellt, dass die Kühlung und das Mischen auf das Endprodukt ausgerichtet werden können, ohne eine nachfolgende Änderung der Eigenschaften des Flüssigkeitsprodukts P in Kauf nehmen zu müssen. Der Anschluss der zweiten Leitung 9b an die erste Leitung 9a kann jedoch an einer anderen Stelle des Zirkulationskreislaufs 8 realisiert werden.

Nach dem Kühlen und Mischen wird das abfüllbereite Flüssigkeitsprodukt P bei geöffneter Stellung eines Zirkulationsumschaltventils 10 in den Abfüllbehälter 1c geleitet.

Der Abfüllbehälter 1c weist einen Kontrollkreislauf 11 zur Messung einer Dichte und/oder einer Temperatur und/oder eines Kohlendioxid-Gehalts des Flüssigkeitsprodukts P auf. Die Messung der Dichte des Flüssigkeitsprodukts P lässt Rückschlüsse auf die Konzentration der Komponenten des Flüssigkeitsprodukts P ziehen. Insbesondere variiert die Dichte stark mit einer Zuckerkonzentration im Flüssigkeitsprodukt P. Wird eine Abweichung der Dichte festgestellt, so können sofort Gegenmassnahmen in Form einer sofortigen Korrektur der Konzentration eingeleitet werden. Die Abweichung wird durch eine Änderung der Konzentration der ersten und/oder der zweiten Komponente k1, k2 und/oder des Kohlendioxids korrigiert. Das Flüssigkeitsprodukt P wird bis zur Einstellung des Sollwerts der betreffenden Komponente und/oder des Kohlendioxids im Abfüllbehälter 1c im Zirkulationskreislauf 8 geführt.

Beispielsweise wird im Falle einer zu niedrigen Menge einer der flüssigen Komponenten k1 die Weichenanordnung 14a des ersten Mengenregelstromkreises 2a der Komponente k1 auf eine Zuführung in die erste Leitung 9a geschaltet und somit die Konzentration der Komponente k1 sofort erhöht.

Wird eine exzessive Menge der Komponente k1 festgestellt, so werden die übrigen Komponenten, in diesem Fall die zweite Komponente k2, in die erste Leitung 9a eingespeist. Bei Bedarf kann die Kohlendioxidkonzentration zusätzlich geändert werden.

Wird eine zu geringe Kohlendioxid-Konzentration festgestellt, so wird das dritte Regelventil 5c nachgeregelt, um mehr Kohlendioxid in die erste Leitung 9a einzuspeisen.

Im Falle, dass die Kohlendioxid-Konzentration zu hoch ist, gibt es einerseits die Möglichkeit, den Flüssigkeitsanteil in der ersten Leitung 9a zu erhöhen, indem die erste und die zweite Komponente k1, k2 im richtigen Verhältnis zueinander in die erste Leitung 9a eingespeist werden und andererseits den Gasdruck des Kohlendioxids im Abfüllbehälter 1c mittels des vierten Umschaltventils 12 zu senken, wodurch Kohlendioxid aus dem im Abfüllbehälter befindlichen Flüssigkeitsprodukt P in die Atmosphäre des Abfüllbehälters 1c entweichen kann.

Entspricht die Ist-Temperatur des Flüssigkeitsprodukts P nicht der Soll-Temperatur, so wird die Ist-Temperatur über das Kühlelement 15 nachgeregelt.

In einer aktiven Phase der Abfüllvorrichtung 25, d.h. wenn die Abfüllvorrichtung 25 eine Menge des Flüssigkeitsprodukts P aus dem Abfüllbehälter entnimmt, wird über die erste Leitung 9a im Wesentlichen die gleiche Menge an Flüssigkeitsprodukt P nachgeliefert. Zu diesem Zeitpunkt werden die erste und die zweite Komponente k1, k2 in die erste Leitung 9a eingespeist und der jeweilige Speicherbehälter 1a, 1b über die erste bzw. die zweite Versorgungsleitung 26a, 26b nachgefüllt.

In einer passiven Phase der Abfüllvorrichtung 25, welche z. B. wegen einer Störung anderer Komponenten der Herstellungskette eintreten kann, wird eine Zirkulation des im Abfüllbehälter 1c und in der ersten Leitung 9a befindlichen Flüssigkeitsprodukts P im Zirkulationskreislauf 8 mittels der dritten Fördereinrichtung 17 konstant gehalten wird. Dadurch wird sichergestellt, dass einerseits durch ein wiederholtes Passieren des Kühlelements 15 das Flüssigkeitsprodukt weiterhin die Soll-Temperatur beibehält und andererseits das die Mischqualität des Flüssigkeitsprodukts P, welche sich beispielsweise bei einer unbewegten Lagerung im Abfüllbehälter 1c durch Ablagerungen von Fruchtsaftanteilen am Boden des Abfüllbehälters 1c deutlich verschlechtern kann, durch ein Passieren des Mischelements aufrechterhalten wird.

Obwohl vorteilhafte Ausführungsformen der Erfindung gezeigt und beschrieben worden sind, ist die Erfindung nicht auf diese beschränkt, sondern sie kann, im Rahmen des Geltungsbereichs der folgenden Ansprüche, auf andere, mannigfaltige Weisen, ausgeführt und angewendet werden.

### Bezugszeichenliste

- 1: = Druckausgleichsleitung
- 1a, 1b: = erster und zweiter Speicherbehälter
- 1c: = Abfüllbehälter
- 1d: = Kohlendioxidspeicher
- 2a, 2b: = erster und zweiter Mengenstromregelkreis
- 3a, 3b: = erste und zweite Fördereinrichtung
- 4a, 4b: = erster und zweiter Durchflussmesser
- 4c: = dritter Durchflussmesser
- 5a, 5b, 5c: = erstes, zweites und drittes Regelventil
- 6a, 6b: = erstes und zweites Rückflussumschaltventil
- 7a, 7b: = erstes und zweites Zuführungsumschaltventil
- 8: = Zirkulationskreislauf
- 9a, 9b: = erste und zweite Leitung
- 9c, 9e: = dritte und vierte Leitung
- 9d: = Abflussleitung
- 10: = Zirkulationsumschaltventil
- 11: = Kontrollkreislauf
- 12: = viertes Umschaltventil
- 13: = Drucksensor
- 14a, 14b: = erste und zweite Weichenanordnung
- 15: = Kühlelement
- 16: = Mischelement
- 17: = dritte Fördereinrichtung
- 18: = Gasbehälter
- 19, 20: = zweites und drittes Umschaltventil
- 21: = Flüssigkeitsstandmessgerät
- 22: = Abfüllleitung
- 23: = Abführumschaltventil
- 24a, 24b: = erstes und zweites Ende der ersten Leitung
- 25: = Abfüllvorrichtung
- 26a, 26b: = erste und zweite Versorgungsleitung
- 27a, 27b: = erstes und zweites Versorgungsumschaltventil
- 28a: = Stelle des Anschlusses des ersten Mengenregestromkreises
- 28b: = Anschlusspunkt des zweiten Mengenregelstromkreises
- F: = Förderrichtung
- P: = Flüssigkeitsprodukt
- 30: = Anlage

## Patentansprüche

1. Anlage (30) zur kontinuierlichen Herstellung eines aus mindestens zwei flüssigen, pumpfähigen Komponenten (k1, k2) bestehendem Flüssigkeitsprodukts (P), mit einem ersten und einem zweiten Speicherbehälter (1a, 1b) für jede Komponente (k1, k2) und einem jeweils dem ersten und dem zweiten Speicherbehälter (1a, 1b) zugeordneten ersten bzw. zweiten Mengenstromregelkreis (2a, 2b) zur Einstellung eines Soll-Mengenstroms der Komponente (k1, k2), wobei eine erste und eine zweite Fördereinrichtung (3a, 3b) die Komponente (k1, k2) aus dem jeweiligen Speicherbehälter (1a, 1b) in den jeweiligen Mengenstromregelkreis (2a, 2b) pumpt, und nacheinander in Förderrichtung (F) der Komponente (k1, k2) ein erster bzw. ein zweiter Durchflussmesser (4a, 4b) zur Messung eines Ist-Mengenstroms der Komponente (k1, k2) und ein erstes bzw. ein zweites Regelventil (5a, 5b) zur Einstellung des Ist-Mengenstroms nachgeschaltet sind, wobei für jeden Mengenstromregelkreis (2a, 2b) ein erste bzw. eine zweite Weichenanordnung (14a, 14b) vorgesehen ist, welche einerseits bei einer Abweichung des Ist-Mengenstroms vom jeweiligen Soll-Mengenstrom die Komponente (k1, k2) in den jeweiligen Speicherbehälter (1a, 1b) zurückführt und andererseits bei einer Übereinstimmung des Ist-Mengenstroms mit dem jeweiligen Soll-Mengenstrom die Komponente (k1, k2) in eine erste Leitung (9a) an deren ersten Ende (24a) einspeist, welche erste Leitung (9a) mit einer zweiten Leitung (9b) zur Einspeisung von Kohlendioxid verbunden und an einem zweiten Ende (24b) an einem Abfüllbehälter (1c) angeschlossen ist, wobei die erste Leitung (9a) das mit Kohlendioxid versetzte Flüssigkeitsprodukt (P) in den Abfüllbehälter (1c) einspeist, aus welchem Abfüllbehälter (1c) nicht-kontinuierlich Mengen des Flüssigkeitsprodukts (P) über eine Abfüllleitung (22) entnommen werden,
**dadurch gekennzeichnet,**
**dass** die Speicherbehälter (1a, 1b) und der Abfüllbehälter (1c) als Druckbehälter ausgebildet sind und miteinander mittels mindestens einer Druckausgleichsleitung (1) zur Herstellung eines Druckausgleichs zwischen den Speicherbehältern (1a, 1b) und dem Abfüllbehälter (1c) verbunden sind und zusammen mit der Druckausgleichsleitung (1) ein Druckausgleichsystem bilden.

2. Anlage nach Anspruch 1, **dadurch gekennzeichnet, dass** eine Abflussleitung (9d) zur Abführung einer Menge des Flüssigkeitsprodukts (P) aus dem Abfüllbehälter (1c) das erste Ende (24a) der ersten Leitung mit dem Abfüllbehälter (1c), insbesondere einem Bodenbereich des Abfüllbehälters (1c) verbindet, wobei die erste Leitung (9a) und die Abflussleitung (9d) einen Zirkulationskreislauf (8) des Flüssigkeitsprodukts (P) bilden.

3. Anlage nach Anspruch 1 oder 2, **dadurch gekennzeichnet, dass** ein Kohlendioxidspeicher (1d) an der zweiten Leitung (9b) angeschlossen ist, wobei die zweite Leitung (9b) einen dritten Durchflussmesser (4c) und ein drittes Regelventil (5c) zur Steuerung der in die erste Leitung (9a) eingespeisten Kohlendioxid-Durchflussmenge umfasst.

4. Anlage nach Anspruch 2 oder 3, **dadurch gekennzeichnet, dass** im Zirkulationskreislaüf (8) eine dritte Fördereinrichtung (17) angeordnet ist, welche derart ausgestaltet ist, dass sie das im Zirkulationskreislauf (8) befindliche Flüssigkeitsprodukt (P) in ein Mischelement (16), insbesondere in ein statisches Mischelement, und weiter, bei einer geöffneten Stellung eines in Förderrichtung (F) hinter dem Mischelement (16) angeordneten ersten Umschaltventils (10), in den Abfüllbehälter (1c) leitet.

5. Anlage nach Anspruch 4, **dadurch gekennzeichnet, dass** im Zirkulationskreislauf (8) ein in der ersten Leitung (9a) geschaltetes, insbesondere zwischen der dritten Fördereinrichtung (17) und dem Mischelement (16) geschaltetes, Kühlelement (15) zum Kühlen des Flüssigkeitsprodukts (P) vorgesehen ist.

6. Anlage nach Anspruch 5, **dadurch gekennzeichnet, dass** die zweite Leitung (9b) zwischen der dritten Fördereinrichtung (17) und dem Kühlelement (15) an der ersten Leitung (9a) angeschlossen ist.

7. Anlage nach Anspruch 3, **dadurch gekennzeichnet, dass** der Kohlendioxidspeicher (1d) mittels einer mit einem dritten Umschaltventil (20) versehenen vierten Leitung (9e) mit dem Druckausgleichsystem verbunden ist, wobei die vierte Leitung (9e) derart ausgestaltet ist, dass sie in einem geöffneten Zustand des dritten Umschaltventils (20) Kohlendioxid in das Druckausgleichsystem leitet.

8. Anlage nach einem der vorangehenden Ansprüche, **dadurch gekennzeichnet, dass** ein Gasbehälter (18) mittels einer mit einem zweiten Umschaltventil (19) versehenen dritten Leitung (9c) mit dem Druckausgleichsystem verbunden ist, wobei die dritte Leitung (9c) derart ausgestaltet ist, dass sie in einem geöffneten Zustand des zweiten Umschaltventils (19) im Gasbehälter (18) befindliches Gas in das Druckausgleichsystem leitet.

9. Anlage nach einem der vorangehenden Ansprüche, **dadurch gekennzeichnet, dass** der Abfüllbehälter (1c) ein viertes Umschaltventil (12), insbesondere ein Überdruckventil, zu einer Druckreduzierung in seinem Inneren aufweist.

10. Anlage nach einem der vorangehenden Ansprüche, **dadurch gekennzeichnet, dass** der Abfüllbehälter (1c) einen Kontrollkreislauf (11) zur Messung einer Dichte und/oder einer Temperatur und/oder eines Kohlendioxid-Gehalts des Flüssigkeitsprodukts (P) aufweist.

11. Anlage nach einem der vorangehenden Ansprüche, **dadurch gekennzeichnet, dass** der Abfüllbehälter (1c) und/oder der erste Speicherbehälter (1a) und/oder der zweite Speicherbehälter (1b) ein Flüssigkeitsstandmessgerät (21) aufweist.

12. Verfahren zur kontinuierlichen Herstellung eines aus mindestens zwei Komponenten (k1, k2) und Kohlendioxid bestehendem Flüssigkeitsprodukts (P), unter Verwendung einer erfindungsgemässen Anlage (30) nach einem der vorangehenden Ansprüche,
**dadurch gekennzeichnet,**
**dass** im Betrieb der Anlage (30) ein kontinuierlicher Druckausgleich zwischen den Speicherbehältern (1a, 1b) und dem Abfüllbehälter (1c) mittels der Druckausgleichsleitung (1) vorgenommen wird.

13. Verfahren nach Anspruch 12, **dadurch gekennzeichnet, dass** durch das dritte Regelventil (5c) eine Durchflussmenge des Kohlendioxids in den Zirkulationskreislauf (8) derart eingestellt wird, dass das Flüssigkeitsprodukt (P) einen Kohlendioxid-Sollwert beibehält.

14. Verfahren nach Anspruch 12 oder 13, **dadurch gekennzeichnet, dass** ein Flüssigkeitsstand in den Speicherbehältern (1a, 1b) und im Abfüllbehälter (1c) im Wesentlichen konstant gehalten wird.

15. Verfahren nach einem der Ansprüche 12 bis 14, **dadurch gekennzeichnet, dass** der Gasdruck im Druckausgleichsystem durch ein Öffnen des dritten Umschaltventils (20) erhöht wird.

16. Verfahren nach einem der Ansprüche 12 bis 15, **dadurch gekennzeichnet, dass** eine Zirkulation des Flüssigkeitsprodukts (P) im Zirkulationskreislauf (8) mittels der dritten Fördereinrichtung (17) konstant gehalten wird.

17. Verfahren nach einem der Ansprüche 12 bis 16, **dadurch gekennzeichnet, dass** das Flüssigkeitsprodukt (P) mittels des Kühlelements (15) auf eine Soll-Temperatur gehalten wird.

18. Verfahren nach einem der Ansprüche 12 bis 17, **dadurch gekennzeichnet, dass** das Flüssigkeitsprodukt (P) mittels des Mischelements (16) durchgemischt wird.

## Claims

1. System (30) for continuously producing a liquid product (P) consisting of at least two liquid components (k1, k2) that can be pumped, with a first and a second storage tank (1a, 1b) for each component (k1, k2) and a first and a second mass-flow control circuit (2a, 2b) attributed to the first or the second storage tank (1a, 1b), respectively, for establishing a target mass flow of the component (k1, k2), wherein a first and a second supply device (3a, 3b) pumps the component (k1, k2) out of the respective storage tank (1a, 1b) into the respective mass-flow control circuit (2a, 2b), and a first or a second flow meter (4a, 4b), respectively, for measuring a current mass-flow of the component (k1, k2) and a first or a second regulating valve (5a, 5b), respectively, for adjusting the current mass-flow are installed downstream following each other in supply direction (F) of the component (k1, k2), wherein a first or a second switch arrangement (14a, 14b), respectively, is provided for each mass-flow control circuit (2a, 2b), which on the one hand returns the component (k1, k2) in the corresponding storage tank (1a, 1b) in case of a deviation of the current mass-flow from the respective target mass-flow and on the other hand feeds the component (k1, k2) into a first line (9a) at its first end (24a) in case of a match of the current mass-flow with the respective target mass-flow, which first line (9a) is connected with a second line (9b) for feeding carbon dioxide and is connected at a second end 24b with a filling tank (1c), wherein the first line (9a) feeds the liquid product (P) containing carbon dioxide into the filling tank (1c), from which filling tank (1c) noncontinuous amounts of the liquid product (P) are withdrawn via a filling line (22),
**characterized in that** the storage tanks (1a, 1b) and the filling tank (1c) are designed as pressure vessels and are interconnected by means of at least one pressure equalization line (1) for establishing a pressure equalization between the storage tanks (1a, 1b) and the filling tank (1c) and form together with the pressure equalization line (1) a pressure equalization system.

2. System according to claim 1, **characterized in that** a discharge line (9d) for discharging an amount of the liquid product (P) out of the filling tank (1c) connects the first end (24a) of the first line with the filling tank (1c), particularly with a bottom section of the filling tank (1c), wherein the first line (9a) and the discharge line (9d) form a circulation circuit (8) of the liquid product (P).

3. System according to claim 1 or 2, **characterized in that** a carbon dioxide storage tank (1d) is connected with the second line (9b), wherein the second line (9b) comprises a third flow meter (4c) and a third regulating valve (5c) for controlling the mass-flow of carbon dioxide fed into the first line (9a).

4. System according to claim 2 or 3, **characterized in that** a third supply device (17) is arranged in the circulation circuit (8), which is adapted to direct the liquid product (P) located in the circulation circuit (8) into a mixing element (16), particularly into a static mixing element, and further into the filling tank (1c) in case of an open position of a first switching valve (10) arranged beyond the mixing element (16) in supply direction (F).

5. System according to claim 4, **characterized in that** a cooling element (15) for cooling the liquid product (P) is provided in the circulation circuit (8), being located along the first line (9a), particularly being located between the third supply device (17) and the mixing element (16).

6. System according to claim 5, **characterized in that** the second line (9b) is connected with the first line (9a) between the third supply device (17) and the cooling element (15).

7. System according to claim 3, **characterized in that** the carbon dioxide storage tank (1d) is connected with the pressure equalization system by means of a fourth line (9e) which has a third switching valve (20), wherein the fourth line (9e) is adapted to supply carbon dioxide into the pressure equalization system when the third switching valve (20) is in open position.

8. System according to one of the preceding claims, **characterized in that** a gas tank (18) is connected with the pressure equalization system by means of a third line (9c) having a second switching valve (19), wherein the third line (9c) is adapted to supply gas from the gas tank (18) into the pressure equalization system when the second switching valve (19) is in open position.

9. System according to one of the preceding claims, **characterized in that** the filling tank (1c) has a fourth switching valve (12), particularly an overpressure valve, for reducing the pressure inside it.

10. System according to one of the preceding claims, **characterized in that** the filling tank (1c) has a control circuit (11) for measuring a density and/or a temperature and/or a carbon dioxide concentration of the liquid product (P).

11. System according to one of the preceding claims, **characterized in that** the filling tank (1c) and/or the first storage tank (1a) and/or the second storage tank (1b) has a liquid level measuring device (21).

12. Method for continuously producing a liquid product (P) consisting of at least two components (k1, k2) and carbon dioxide by using a system of the invention according to one of the preceding claims,
**characterized in that** a continuous pressure equalization is carried out during the operation of the system (30) between the storage tanks (1a, 1b) and the filling tank (1c) by means of the pressure equalization line (1).

13. Method according to claim 12, **characterized in that** a mass-flow of the carbon dioxide into the circulation circuit (8) is adjusted by the third regulating valve (5c) in such a way that the liquid product (P) keeps a carbon dioxide target value.

14. Method according to claim 12 or 13, **characterized in that** a liquid level in the storage tanks (1a, 1b) and in the filling tank (1c) is kept substantially constant.

15. Method according to one of the claims 12 to 14, **characterized in that** the gas pressure in the pressure equalization system is increased by opening the third switching valve (20).

16. Method according to one of the claims 12 to 15, **characterized in that** a circulation of the liquid product (P) in the circulation circuit (8) is kept constant by means of the third supply device (17).

17. Method according to one of the claims 12 to 16, **characterized in that** the liquid product (P) is kept at a target temperature by means of the cooling element (15).

18. Method according to one of the claims 12 to 17, **characterized in that** the liquid product (P) is mixed by means of the mixing element (16).

## Revendications

1. Système (30) pour la production continue d'un produit liquide (P) qui consiste d'au moins deux composants liquides (k1, k2) qui sont aptes à être pompés, avec un premier et un deuxième réservoir de stockage (1a, 1b) pour chaque composant (k1, k2) et un premier et un deuxième circuit de contrôle de débit massique (2a, 2b) attribué chacun au premier ou bien au deuxième réservoir de stockage pour établir un débit massique de consigne du composant (k1, k2), un premier et un deuxième dispositif d'alimentation (3a, 3b) pompant le composant (k1, k2) hors du respectif réservoir de stockage (1a, 1b) dans le respectif circuit de contrôle de débit massique (2a, 2b), et un premier ou bien un deuxième débitmètre (4a, 4b) pour mesurer un débit massique actuel du composant (k1, k2) et une première ou bien une deuxième soupape régulatrice (5a, 5b) pour ajuster le débit massique actuel étant installées successivement en aval dans une direction (F) d'alimentation du composant (k1, k2), un premier ou bien un deuxième arrangement de commutation (14a, 14b) étant prévu pour chaque circuit de contrôle de débit massique (2a, 2b), qui d'un côté retourne le composant (k1, k2) dans le correspondant réservoir de stockage (1a, 1b) en cas d'une déviation du débit massique actuel du respectif débit massique et de l'autre côté alimente le composant (k1, k2) dans un premier conduit (9a) par sa première extrémité (24a) en cas d'une correspondance du débit massique actuel avec le respectif débit massique de consigne, le premier conduit (9a) étant connecté avec un deuxième conduit (9b) pour une alimentation du dioxyde de carbone et étant connecté à une deuxième extrémité (24b) avec un réservoir de remplissage (1c), le premier conduit (9a) alimentant le produit liquide (P) qui contient du dioxyde de carbone dans le réservoir de remplissage (1c), des quantités non-continues du produit liquide (P) étant extraites du réservoir de remplissage (1c) par un conduit de remplissage (22),
**caractérisé en ce que** les réservoirs de stockage (1a, 1b) et le réservoir de remplissage (1c) sont conçus comme des récipients à pression et sont interconnectés à l'aide d'au moins un conduit (1) de compensation de pression pour établir une égalisation de pression entre les réservoirs de stockage (1a, 1b) et le réservoir de remplissage (1c) et forment ensemble avec le conduit de compensation de pression (1) un système de compensation de pression.

2. Système selon la revendication 1, **caractérisé en ce qu'**un conduit de décharge (9d) pour décharger une quantité du produit liquide (P) du réservoir de remplissage (1c) connecte la première extrémité (24a) du premier conduit avec le réservoir de remplissage (1c), particulièrement avec une partie inférieure du réservoir de remplissage (1c), le premier conduit (9a) et le conduit de décharge (9d) formant un circuit de circulation (8) du produit liquide (P).

3. Système selon la revendication 1 ou 2, **caractérisé en ce qu'**un réservoir de stockage (1d) de dioxyde de carbone est connecté avec un deuxième conduit (9b), le deuxième conduit (9b) comprenant un troisième débitmètre (4c) et une troisième soupape régulatrice (5c) pour contrôler le débit massique de dioxyde de carbone alimenté dans le premier conduit (9a).

4. Système selon la revendication 2 ou 3, **caractérisé en ce qu'**un troisième dispositif d'alimentation (17) est arrangé dans le circuit de circulation (8), étant adapté à guider le produit liquide (P) qui se trouve dans le circuit de circulation (8) dans un élément de mixage (16), particulièrement dans un élément de mixage statique, et ultérieurement dans le réservoir de remplissage (1c) en cas d'une position ouverte d'une première soupape de commutation (10) arrangée au-delà de l'élément de mixage (16) dans la direction d'alimentation (F).

5. Système selon la revendication 4, **caractérisé en ce qu'**un élément de refroidissement (15) pour refroidir le produit liquide (P) est prévu dans le circuit de circulation (8), étant situé le long du premier conduit (9a), particulièrement étant situé entre le troisième dispositif d'alimentation (17) et l'élément de mixage (16).

6. Système selon la revendication 5, **caractérisé en ce que** le deuxième conduit (9b) est connecté avec le premier conduit (9a) entre le troisième dispositif d'alimentation (17) et l'élément de refroidissement (15).

7. Système selon la revendication 3, **caractérisé en ce que** le réservoir de stockage de dioxyde de carbone (1d) est connecté avec le système de compensation de pression à l'aide d'un quatrième conduit (9e) qui a une troisième soupape de commutation (20), le quatrième conduit (9e) étant adapté à alimenter du dioxyde de carbone dans le système de compensation de pression quand la troisième soupape de commutation (20) se trouve dans une position ouverte.

8. Système selon l'une des revendications précédentes, **caractérisé en ce qu'**un réservoir de gaz (18) est connecté avec le système de compensation de pression par un troisième conduit (9c) ayant une deuxième soupape de commutation (19), le troisième conduit (9c) étant adapté à alimenter du gaz du réservoir du gaz (18) dans le système de compensation de pression quand la deuxième soupape de commutation (19) se trouve dans une position ouverte.

9. Système selon l'une des revendications précédentes, **caractérisé en ce que** le réservoir de remplissage (1c) a une quatrième soupape de commutation (12), particulièrement une soupape de surpression, pour réduire la pression dedans.

10. Système selon l'une des revendications précédentes, **caractérisé en ce que** le réservoir de remplissage (1c) a un circuit de contrôle (11) pour mesurer une densité et/ou une température et/ou une concentration de dioxyde de carbone du produit liquide (P).

11. Système selon l'une des revendications précédentes, **caractérisé en ce que** le réservoir de remplissage (1c) et/ou le premier réservoir de stockage (1a) et/ou le deuxième réservoir de stockage (1b) a un dispositif de mesure du niveau de liquide (21).

12. Méthode pour la production continue d'un produit liquide (P) qui consiste d'au moins deux composants liquides (k1, k2) et du dioxyde de carbone en utilisant un système de l'invention selon l'une des revendications précédentes,
**caractérisée en ce qu'**une égalisation continue de pression est effectuée pendant l'opération du système (30) entre les réservoirs de stockage (1a, 1b) et le réservoir de remplissage (1c) par le conduit de compensation de pression (1).

13. Méthode selon la revendication 12, **caractérisée en ce qu'**un débit massique du dioxyde de carbone dans le circuit de circulation (8) est ajusté par la troisième soupape régulatrice (5c), de sorte que le produit liquide (P) garde une valeur consigne du dioxyde de carbone.

14. Méthode selon la revendication 12 ou 13, **caractérisée en ce qu'**un niveau du liquide dans les réservoirs de stockage (1a, 1b) et dans le réservoir de remplissage (1c) est gardé essentiellement constant.

15. Méthode selon l'une des revendications 12 à 14, **caractérisée en ce que** la pression du gaz dans le système de compensation de pression est augmentée en ouvrant la troisième soupape de commutation (20).

16. Méthode selon l'une des revendications 12 à 15, **caractérisée en ce qu'**une circulation du produit liquide (P) dans le circuit de circulation (8) est gardée constante par le troisième dispositif d'alimentation (17).

17. Méthode selon l'une des revendications 12 à 16, **caractérisée en ce que** le produit liquide (P) est gardé à une température de consigne par l'élément de refroidissement (15).

18. Méthode selon l'une des revendications 12 à 17, **caractérisée en ce que** le produit liquide (P) est mixé par l'élément de mixage (16).
